# EUROPÄISCHE PATENTSCHRIFT

(11) **EP 2 874 258 B1**
(45) Veröffentlichungstag und Bekanntmachung des Hinweises auf die Patenterteilung: **19.05.2021**
(21) Anmeldenummer: 14192838.2
(22) Anmeldetag: 12.11.2014
(51) Int. Cl.: H02H 3/08, H02H 9/00, H02H 3/06, H02H 3/093, H02H 7/18

(54) **Elektronische Schaltungsanordnung**
Electronic circuit arrangement
Circuit électronique

(30) Priorität: 13.11.2013 DE 102013223141
(43) Veröffentlichungstag der Anmeldung: 20.05.2015
(73) Patentinhaber: ecom instruments GmbH, 97959 Assamstadt (DE)
(72) Erfinder: Sack, Norbert, 97922 Lauda-Königshofen (DE)
(74) Vertreter: BRP Renaud & Partner mbB Rechtsanwälte Patentanwälte Steuerberater

(56) Entgegenhaltungen:
- US-A- 6 127 882
- US-A1- 2003 107 855
- US-A1- 2015 092 310

## Beschreibung

Die vorliegende Erfindung betrifft eine elektronische Schaltungsanordnung zur Verwendung in einem explosionsgefährdeten Bereich sowie eine elektronische Baugruppe mit einer solchen elektronischen Schaltungsanordnung. Die Erfindung betrifft ferner ein elektronisches System mit einer solchen elektronischen Baugruppe.

In explosionsgefährdeten Bereichen wie zum Beispiel Ölplattformen o.ä. kommen häufig mobile elektronische Geräte wie beispielsweise Mobiltelefone oder Laptops zum Einsatz, die zur Versorgung mit elektrischer Energie über eine geeignete externe Schnittstelle an eine separate Energieversorgungseinheit in Form einer Batterie angeschlossen werden können. Zur Vermeidung einer unerwünschten Glüh- oder Funkenzündung kann die Batterie bzw. das elektronische Gerät mit einer speziellen elektronischen Schutzschaltung ausgestattet werden. Eine solche elek-tronische Schutzschaltung kann Schaltkreise zur elektrischen Strom- bzw. Energiebegrenzung enthalten, welche verhindern, dass an der besagten, nach außen geführten elektronischen Schnittstelle zu hohe elektrische Ströme bzw. elektrische Energien bereitgestellt werden. Denn für die Verwendung von elektronischen Geräten in explosionsgefährdeten Bereichen stellt gerade eine solche Schnittstelle ein besonderes Gefährdungspotenzial dar, da durch die an den Anschlusselementen der Schnittstelle bereitgestellte elektrische Energie durch Glüh- oder Funkenzündung ein im explosionsgefährdeten Bereich gegebenenfalls vorhandene Gas-Luftgemisch gezündet werden kann.

Die US 2003/107855 A1 offenbart eine elektronische Schutzschaltung, welche drei elektronische Schaltungen umfasst, die ein Schaltelement in einen geöffneten Zustand umschalten, um auf diese Weise die Stromversorgung eines elektronischen Geräts zu unterbrechen.

Die US 6,12 7,882 A behandelt eine Schaltungsanordnung zur Strombegrenzung eines elektrischen Stroms und lehrt ein Rücksetzen eines geöffneten Schaltungselements in den geschlossenen Zustand mithilfe einer Zeitschaltung.

Die Gefahr einer Funkenzündung besteht primär dann, wenn der an der Schnittstelle bereitgestellte elektrische Strom in der Art eines Strompulses o.ä. zeitlich schnell ansteigt. Solche elektrische Strompulse können im Nominalbetrieb der Batterie bzw. des an die Batterie angeschlossenen elektronischen Geräts auftreten. Ein ähnlicher Effekt wird erzielt, wenn die an der Schnittstelle bereitgestellten elektrischen Pole - also Minus- und Pluspol - der Batterie kurzgeschlossen werden, was wiederum zu einem sehr schnell ansteigenden elektrischen Kurzschlussstrom führt. Ein elektrischer Kurzschluss kann bekanntlich durch ein versehentliches Herstellen einer elektrischen Verbindung zwischen besagten Polen der Batterie erzeugt werden; aber auch eine Fehlfunktion in dem mit der Batterie verbundenen elektronischen Gerät kann Ursache eines elektrischen Kurzschlusses sein.

Demgegenüber droht das Auftreten einer Glühzündung bei einer übermäßigen Erwärmung/Erhitzung der Bauteile der Batterie sowie des elektronischen Geräts einschließlich besagter Schnittstelle zwischen Batterie und elektronischem Gerät. Eine solche Erwärmung kann Folge eines unzulässig hohen elektrischen Versorgungsstroms zwischen Batterie und elektronischem Gerät sein, wenn dieser einen vorgegebenen oberen Grenzwert überschreitet. Hinsichtlich des unerwünschten Auftretens einer Glühzündung spielen kurzzeitige Stromschwankungen in von Strompulse hingegen keine Rolle.

Um nun das Auftreten sowohl einer Glüh- als auch einer Funkenzündung an der zwischen Batterie und elektronischem Gerät vorgesehenen Schnittstelle zu verhindern. müssen besagte elektronische Schutzschaltungen derart konzipiert werden, dass sie einerseits auf einen langsamen Anstieg des elektrischen Stroms über einen zulässigen Maximalwert hinaus reagieren, andererseits aber auch im Falle schneller, pulsartiger Stromschwankungen eine schnelle Abschaltung der Versorgungsleitung garantieren. Zusätzlich muss die Schutzschaltung in der Lage sein, einen elektrischen Kurzschluss in der Batterie oder im elektronischen Gerät, welches mit elektrischer Energie aus der Batterie versorgt wird, zu erkennen und zu unterbinden.

Die vorliegende Erfindung beschäftigt sich daher mit dem Problem, eine verbesserte Ausführungsform für eine elektronische Schaltungsanordnung anzugeben, mittels welcher gleichermaßen das Auftreten sowohl einer Funken- als auch Glühzündung an deren externe Schnittstellen vermieden werden kann.

Dieses Problem wird durch den Gegenstand der unabhängigen Patentansprüche gelöst. Bevorzugte Ausführungsformen sind Gegenstand der abhängigen Patentansprüche.

Die vorliegende Erfindung beruht auf dem Gedanken, eine elektronische Schaltungsanordnung zur Vermeidung sowohl einer Glühzündung als auch einer Funkenzündung in einem elektronischem Gerät und/oder einer das elektronische Gerät mit elektrischer Energie versorgenden Batterie mit drei verschiedenen Schutzschaltungen zu versehen, welche jeweils individuell darauf abgestimmt sind, in einem explosionsgefährdeten Bereich das Auftreten unzulässig hoher Ströme bzw. Energien in der Versorgungsleitung zwischen Batterie und elektronischem Gerät und folglich auch an der Schnittstelle zwischen Batterie und elektronischem Gerät zu vermeiden. Die Konfiguration der elektronischen Schaltungsanordnung mit drei verschiedenen, unterschiedlich ausgestalteten Schutzschaltungen begünstigt eine Unterdrückung verschiedener Arten unzulässiger elektrischer Ströme, die wie oben beschrieben auf unterschiedlichen Ursachen beruhen und sich folglich hinsichtlich ihres Maximalwert, ihres zeitlichen Verlaufs - der beispielweise monoton anteigen oder aber einen pulsartigen Verlauf aufweisen kann - voneinander unterscheiden.

Eine solche Unterdrückung unzulässiger elektrischer Ströme in der Versorgungsleitung erfolgt in jedem Fall durch Umschalten eines in der Versorgungsleitung vorgesehenen Schaltelements in einen geöffneten Zustand, in welchem die elektrische Versorgungsleitung unterbrochen ist und somit kein Strom durch selbige fließen kann. In einem solchen, elektrisch unterbrochenen Zustand der Versorgungsleitung steht auch keine explosionsgefährdende elektrische Energie an der Schnittstelle zwischen Batterie und elektronischem Gerät zur Verfügung, so dass sich die komplette Anordnung aus Batterie, erfindungsgemäßer Schaltungsanordnung und elektronischem Gerät einen explosionssicheren Zustand annimmt.

Eine erste elektronischen Schaltung ist nun erfindungsgemäß derart konfiguriert, dass sie das Schaltelement vom geschlossenen in den geöffneten Zustand umschaltet, wenn der durch die erste Versorgungsleitung fließende elektrische Strom mindestens für eine vorbestimmten erste Zeitdauer einen vorbestimmten ersten Schwellwert überschreitet. Auf diese Weise wird ein dauerhaftes Überschreiten eines maximal zulässigen elektrischen Stroms in der Versorgungsleitung und eine damit verbundene Erhitzung der Schaltungsanordnung, welche eine Glühzündung begünstigt, vermieden. Demgegenüber ist die erste Schaltungsanordnung nicht dafür konzipiert, auf kurzzeitige Stromschwankungen in der Art von "Spikes" zu reagieren, wie sie bei elektronischen Bauteilen bereits in einem nominellen Betrieb regelmäßig auftreten können. Diese Aufgabe übernimmt erfindungsgemäß die zweite elektronische Schaltung. Sie ist derart ausgebildet, dass sie das Schaltelement vom geschlossenen in den geöffneten Zustand umschaltet, wenn der durch die erste Versorgungsleitung fließende elektrische Strom einen vorbestimmten zweiten Schwellwert überschreitet, und nach einem Unterschreiten des zweiten Schwellwerts - ein solches Unterschreiten des zweiten Schwellwerts erfolgt zwangsläufig aufgrund des unterbrochenen Zustands der Versorgungsleitung - das Schaltelement wieder in den geschlossenen Zustand zurückschaltet. Derart lassen sich in der Versorgungsleitung unerwünschte, eine Funkenzündung begünstigende Stromspitzen vermeiden, wie sie u.a. beim Anschließen des elektronischen Geräts - über die elektronische Schaltungsanordnung - an die Batterie erzeugt werden können. Da die zweite elektronische Schaltung das Schaltelement unmittelbar nach Überschreiten des zweiten Schwellwerts öffnet und somit die Versorgungsleitung elektrisch unterbrochen wird, wird der zweite Schwellwert innerhalb eines sehr kurzen Zeitraums wieder unterschritten und die Unterbrechung der elektrischen Verbindung wieder aufgehoben. In Betracht kommt insbesondere eine Auslegung der zweiten Schaltungsanordnung derart, dass die besagte elektrische Unterbrechung nur einige, wenige Mikrosekunden beträgt. Eine derart kurzzeitige Unterbrechung des Stromflusses durch die Versorgungsleitung wirkt sich auf die Funktionalität der im elektronischen Gerät verbauten elektronischen Bauelemente auch während besagter Phase fehlender Konnektivität des elektronischen Geräts mit der Batterie nicht negativ aus. Die zweite elektronische Schaltung gestattet somit die Unterdrückung kurzer elektrischer Strompulse, ohne durch eine damit verbundene unterbrochene elektrische Verbindung des elektronischen Geräts mit der Batterie die Funktionalität des elektronischen Geräts zu beeinträchtigen. Mittels der vorangehend vorgestellten beiden Schaltungen wird das langsame Ansteigen über einen Schwellwert hinweg bzw. das Auftreten hochfrequenter Strompulse verhindert.

Um nun zu verhindern, dass das bei Auftreten eines dauerhaften elektrischen Kurzschlusses im elektronischen Gerät das Schaltungselement im Sinne eines Taktens ständig zwischen dem geöffneten und dem geschlossenen Zustand umgeschaltet wird, ist erfindungsgemäß schließlich eine dritte elektronische Schaltung vorgesehen. Die dritte elektronische Schaltung schaltet das Schaltelement vom geschlossenen in den geöffneten Zustand um, sobald der durch die erste Versorgungsleitung fließende elektrische Strom für eine vorbestimmte dritte Zeitdauer einen vorbestimmten dritten Schwellwert überschreitet, der größer ist als der erste Schwellwert der ersten Schaltung. Die dritte Schaltung realisiert dabei eine Kurzschluss-Schutzfunktion, indem sie das Schaltelement vom geschlossenen in den geöffneten Zustand umschaltet, sobald der durch die erste Versorgungsleitung fließende elektrische Strom besagten dritten Schwellwert überschreitet, der größer ist als der der erste Schwellwert der ersten Schaltung, und dies mindestens für einen vorbestimmten Zeitraum. Im Falle eines - in der Regel fehlerbedingten - elektrischen Kurzschlusses der beiden elektrischen Versorgungsleitungen und somit der elektrischen Batterie selbst wird auf diese Weise ein dauerhaftes Überschreiten des elektrischen Kurzschlussstroms über einen kritischen Maximalwert hinaus durch die beiden Versorgungsleitungen vermieden, welches die - im Vergleich zur dritten Schaltungsanordnung - träge reagierende erste Schaltungsanordnung nicht in ausreichendem Maße verhindern kann.

Erfindungsgemäß erfolgt das Umschalten des Schaltelements vom geschlossenen in den geöffneten Zustand durch die zweite Schaltung innerhalb einer zweiten Umschalt-Zeitdauer, welche kleiner ist als eine erste Umschaltdauer, die die erste Schaltung zum Umschalten des Schaltelements benötigt. Auf diese Weise wird das Auftreten von Strompulsen mit besonders hohen Stromspitzen, welche zu einer Funkenzündung führen können, vermieden, und das beim Auftreten von Strompulsen erforderliche, sehr schnelle Abschalten bzw. eine damit verbundene Energiebegrenzung der elektrischen Versorgungsleitung ist gewährleistet. Das Umschalten des Schaltelements vom geschlossenen in den geöffneten Zustand durch die dritte Schaltung erfolgt schließlich innerhalb einer dritten Umschalt-Zeitdauer, welche kleiner als die erste Umschalt-Zeitdauer, aber größer als die zweite Umschalt-Zeitdauer ist.

Bei einer besonders bevorzugten Ausführungsform beträgt die erste Umschaltdauer T₁ zwischen 300ms und 1s. Die zweite Umschaltdauer ist demgegenüber derart festgelegt, dass die während der zweiten Umschaltdauer T₂ übertragene elektrische Energie 40µJ nicht überschreitet. Die dritte Umschaltdauer T₃ beträgt schließlich ungefähr 40ms.

Vorzugsweise ist die erste Schaltung derart ausgelegt, dass der erste Schwellwert zwischen 1A und 1,4 A, vorzugsweise 1,1A, höchst vorzugsweise ca. 1,14A, beträgt. Entsprechend bietet es sich an, die zweite und dritte Schaltung derart zu konzipieren, dass der zweite Schwellwert ca. 6A beträgt und der dritte Schwellwert ca. 2,5A beträgt. Durch eine Festlegung des zweiten Schwellwerts auf 6A - gegenüber einer Festlegung des ersten Schwellwerts auf einen Wert zwischen 1A und 1,4A - wird sichergestellt, dass die zweite Schaltung erst bei Überschreitung eines Schwellstroms aktiviert wird, der deutlich über einem Wert liegt, bei dem die erste Schaltung aktiviert wird, die zur Vermeidung einer Glühzündung die elektrische Versorgungsleitung dauerhaft deaktiviert. Bei Überschreitung des dritten Schwellwerts wird ein kurzschluss-bedingtes, sehr schnelles und dauerhaftes Ansteigen des elektrischen Stroms im elektronischen Gerät bzw. in der Batterie verhindert. Von Bedeutung ist generell eine hinreichend große Differenz zwischen erstem und drittem Schwellwert, so dass die erste und dritte Schaltung nicht gleichzeitig auslösen.

Zur Ermittlung des durch die Versorgungsleitung fließenden elektrischen Stroms kann in der ersten elektrischen Versorgungsleitung ein elektrischer Stromsensor vorgesehen sein, mittels welchem den durch die Versorgungsleitung fließenden elektrischen Strom bestimmt werden kann. Der Stromsensor kann den gemessenen Stromwert in Form eines geeigneten Sensor-Ausgangssignals, beispielsweise in Form einer an einer Signalausgangsleitung bereitgestellten Sensor-Ausgangsspannung anzeigen. In einer technisch besonders einfach zu realisierenden Variante bietet sich die Verwendung eines niederohmigen ohmschen Widerstands an, wobei die an diesem abfallende elektrische Spannung - die in bekannter Weise in linearer Beziehung zum durch den Widerstand fließenden Strom steht -abgegriffen wird.

Um die Anzahl der zur Realisierung der ersten, zweiten und dritten Schaltung benötigten Bauelemente und somit deren Fertigungsaufwand möglichst gering zu halten, kann wenigstens eine der drei Schaltungen - vorzugsweise alle drei Schaltungen - jeweils eine Komparatorschaltung umfassen, welche durch Vergleich eines vorbestimmten Referenz-Spannungssignals mit der vom Stromsensor bereitgestellten elektrischen Sensor-Ausgangsspannung erstes elektrisches Spannungssignal erzeugt, wenn der durch die erste Versorgungsleitung fließende elektrische Strom einen vorbestimmten ersten Komparator-Schwellwert überschreitet. In allen anderen Fällen wird demgegenüber ein vom ersten verschiedenes, zweites elektrisches Spannungssignal erzeugt. Durch ein solches individuelles Festlegen des Komparator-Schwellwerts für jede der drei Schaltungen kann die oben beschriebene Auslösung der jeweiligen Schaltung - d.h. ein Umschalten des Schaltelements durch eine der drei besagten Schaltungen in den geöffneten Zustand - erreicht werden, wenn der der jeweiligen Schaltung zugeordnete Schwellwerts des elektrischen Stroms in der ersten Versorgungsleitung überschritten wird.

Technisch kann die jeweilige Komparatorschaltung mit Hilfe eines Komparatorbauteils, beispielsweise in Form eines dem einschlägigen Fachmann bekannten Operationsverstärkers realisiert sein, welches mit einem ersten Eingangsanschluss mit einem Ausgangsanschluss des Stromsensors verbunden ist, an welchem die Sensor-Ausgangsspannung bereitgestellt ist, und mit einem zweiten Eingangsanschluss mit einer Referenz-Spannungsquelle verbunden ist, an welcher die Referenz-Spannung bereitgestellt ist. Eingangsseitig ist eine mit dem Ausgangsanschluss des Komparatorbauteils und ausgangsseitig mit dem Schaltelement zusammenwirkende erste Schaltungslogik vorgesehen, welche das Schaltelement in den geöffneten Zustand umschaltet, sobald am Ausgangsanschluss das erste Spannungssignal erzeugt wird.

Vorzugsweise umfasst die jeweilige Komparatorschaltung einen am ersten Eingangsanschluss des Komparatorbauteils vorgesehenen Tiefpass-Filter, der auf das vom Stromsensor erzeugte Sensor-Ausgangssignal als Tiefpass wirkt. Dies gestattet die Ausfilterung hochfrequenter Komponenten des elektrischen Stroms durch die Versorgungsleitung mit einer bestimmten Grenzfrequenz, die durch Verwendung unterschiedlich dimensionierter RC-Glieder in den drei Schaltungen individuell an die jeweilige Schaltung angepasst werden kann.

Besonders zweckmäßig kann das RC-Glied in der ersten Schaltung eine Kapazität C₁ von ungefähr 1µF und einen Ohm'schen Widerstand R₁ von ungefähr 100kOhm aufweisen. Alternativ oder zusätzlich kann das RC-Glied in der zweiten Schaltung eine Kapazität C₂ von ungefähr 100pF und einen Ohm'schen Widerstand R₂ von ungefähr 1kOhm aufweisen. Wiederum alternativ oder zusätzlich kann das das RC-Glied in der dritten Schaltung eine Kapazität C₃ von ungefähr 1nF und einen Ohm'schen Widerstand R₃ von ungefähr 10 kOhm aufweisen. Durch den Begriff "ungefähr" soll zum Ausdruck gebracht werden, dass die tatsächlichen Werte der einzelnen Parameter auch geringfügig - mindestens um bis zu 1% - von den explizit genannten Werten abweichen dürfen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine schaltplanartige Darstellung eines Beispiels der erfindungsgemäßen Schaltungsanordnung,
- Fig. 2: verschiedene Szenarien des Stromverlaufs durch die elektrische Versorgungsleitung der Schaltungsanordnung in einem Strom-Zeit-Diagramm,
- Fig. 3: eine schaltplanartige Darstellung einer Komparatorschaltung als Teil der Schaltungsanordnung.

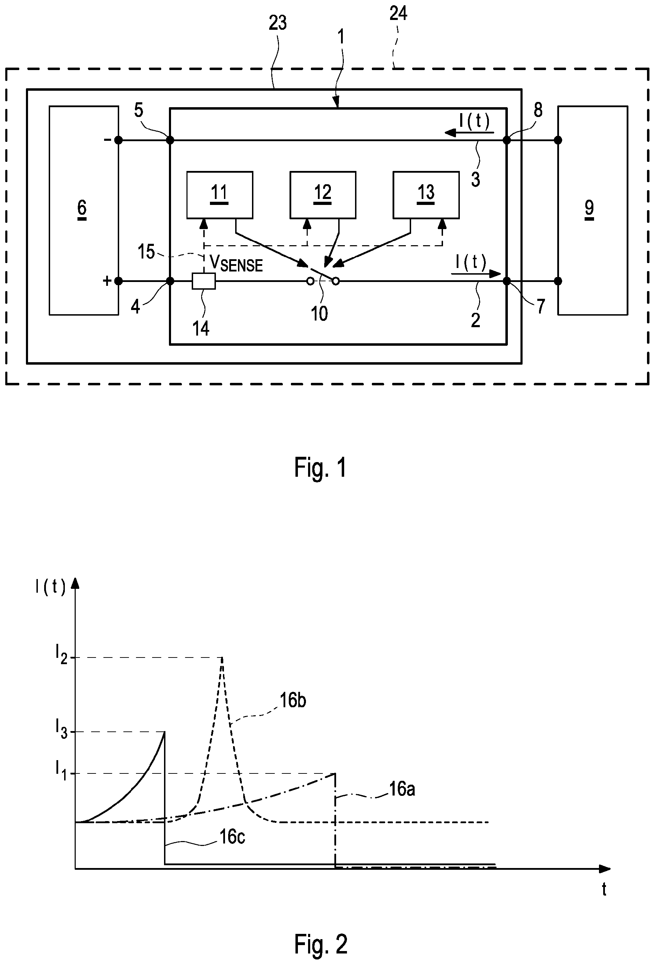

Die Figur 1 illustriert ein Beispiel einer erfindungsgemäßen und mit 1 bezeichneten elektronischen Schaltungsanordnung. Diese umfasst eine und zweite elektrischen Versorgungsleitung 2, 3, welche mittels eines ersten bzw. zweiten Versorgungsleitung-Eingangsanschlusses 4, 5 mit einer elektrischen Energieversorgungseinheit 6 in der Art einer Batterie verbunden sind. Über einen ersten und zweiten Versorgungseinheit-Ausgangsanschluss 7, 8 kann ein elektronisches Gerät 9 an die beiden Versorgungsleitungen 2, 3 und über diese an die Batterie angeschlossen werden, so dass das elektronische Gerät 9 mit elektrischer Energie aus der Batterie versorgt wird. Die Schaltungsanordnung 1 und die Energieversorgungseinheit 6 bilden eine elektronische Baugruppe 23, besagte Baugruppe 23 und das elektronische Gerät ein elektronisches System 24.

In der ersten Versorgungsleitung 2 ist ein Schaltelement 10 vorgesehen, welches zwischen einem geöffneten Zustand, in welchem es die Versorgungsleitung 2 elektrisch unterbricht, und einem geschlossenen Zustand umgeschaltet werden kann. Die Umschaltung zwischen den beiden Zuständen wird unabhängig voneinander durch eine erste elektronische Schaltung 11, eine zweite elektronische Schaltung 12 und eine dritte elektronischen Schaltung 13 gesteuert. Alle drei Schaltungen 11, 12, 13 schalten das Schaltelement 10 in Abhängigkeit vom zeitlichen Verlauf des elektrischen Stromflusses I(t) durch die Versorgungsleitung 2 in den geöffneten Zustand bzw. vom geöffneten Zustand wieder in den geschlossen Zustand zurück.

Die erste elektronische Schaltung 11 ist dabei derart ausgebildet, dass sie das Schaltelement vom geschlossenen in den geöffneten Zustand umschaltet, wenn der durch die erste Versorgungsleitung 2 fließende elektrische Strom I mindestens für eine vorbestimmten erste Zeitdauer T₁ einen vorbestimmten ersten Schwellwert I₁ überschreitet. Dies ist im Strom-Zeit-Diagramm der Figur 2 anhand des Graphen mit dem Bezugszeichen 16a gezeigt. Auf diese Weise kann ein dauerhaftes Überschreiten eines maximal zulässigen elektrischen Stroms in der Versorgungsleitung 2 und eine damit verbundene Erhitzung der Schaltungsanordnung 1 einschließlich der Batterie, welche eine Glühzündung begünstigt, vermieden werden. Demgegenüber ist die erste Schaltungsanordnung 11 nicht dafür konzipiert, auf kurzzeitige Stromschwankungen in der Art von "Spikes" oder Strompulsen zu reagieren, wie sie bei elektronischen Bauteilen bereits in einem nominellen Betrieb regelmäßig auftreten können. Diese Aufgabe übernimmt vorliegend vielmehr die zweite elektronische Schaltung 12. Sie ist derart konzipiert, dass sie das Schaltelement 10 vom geschlossenen in den geöffneten Zustand umschaltet, wenn der durch die erste Versorgungsleitung 2 fließende elektrische Strom einen vorbestimmten zweiten Schwellwert I₂ überschreitet, und das Schaltelement 10 nach Unterschreiten des zweiten Schwellwerts I₂ wieder in den geschlossenen Zustand zurückschaltet. Der zweite Schwellwert I₂ ist dabei größer als der erste Schwellwert I₁, was in der Figur 2 anhand des Graphen mit dem Bezugszeichen 16b gezeigt ist. Typische Werte für den ersten Schwellwert I₁ liegen etwa im Intervall zwischen 1A und 1,4A, vorzugsweise bei 1,1A, für den zweiten Schwellwert I₂ bei ca. 6A. Das Umschalten des Schaltelements 10 vom geschlossenen in die geöffnete Position durch die zweite Schaltung geschieht innerhalb einer zweiten Umschalt-Zeitdauer T₂, die derart festgelegt ist, dass die während der zweiten Umschaltdauer T₂ übertragene elektrische Energie 40µJ nicht überschreitet. Typischerweise ist mit einem solchen Energiebetrag ein Zeitraum im einstelligen Mikrosekunden-Bereich, beispielsweise von ca. 1µs, verbunden. Das Umschalten des Schaltelements 10 in den geöffneten Zustand erfolgt mittels der zweiten Schaltung 12 also so schnell, dass die durch die erste Versorgungsleitung 2 übertragene Energie auf den gewünschten Maximalwert beschränkt wird. Deutlich wird dies bei einem Vergleich der zweiten Umschalt-Zeitdauer T₂ der zweiten Schaltung 12 mit der ersten Umschalt-Zeitdauer T₁ der ersten Schaltung 11: T₁ beträgt typischerweise zwischen 300ms und 1s, T₂ liegt, wie bereits erwähnt, im einstelligen Mikrosekunden-Bereich.

Somit lassen sich in der elektrischen Versorgungsleitung 2 kurzzeitige, eine Funkenzündung begünstigende Stromspitzen - welche typischerweise Werte von mehr als 6A annehmen können - vermeiden, wie sie u.a. beim Anschließen des elektronischen Geräts 9 - über die elektronische Schaltungsanordnung 1 - an die Batterie auftreten können. Da die zweite elektronische Schaltung 12 das Schaltelement 10 unmittelbar nach Überschreiten des zweiten Schwellwerts I₂ öffnet und somit die erste Versorgungsleitung 2 elektrisch unterbrochen wird, wird der zweite Schwellwert I₂ automatisch wieder unterschritten, so dass das Schaltelement 10 wieder in den geschlossenen Zustand zurückgeschaltet und folglich die Unterbrechung der elektrischen Verbindung in der Versorgungsleitung 2 wieder aufgehoben wird. Besagte elektrische Unterbrechung der Versorgungsleitung 2 hält folglich nur für eine sehr kurze Zeitspanne an; bei geeigneter Auslegung der zweiten Schaltungsanordnung 12 sind dies nur einige, wenige Mikrosekunden. Eine derart kurzzeitige Unterbrechung des elektrischen Stromflusses durch die Versorgungsleitung 2 stört die betriebsmäßige Funktionalität der im elektronischen Gerät 8 verbauten elektronischen Bauelemente während besagter Phase fehlender Konnektivität des elektronischen Geräts 9 mit der Batterie nicht. Die zweite elektronische Schaltung 12 gestattet somit die Unterdrückung kurzer elektrischer Strompulse, ohne den Betrieb des elektronischen Geräts 9 aufgrund der unterbrochenen Energieversorgung zu beeinträchtigen.

Die dritte elektronische Schaltung 13 schaltet das Schaltelement 10 nunmehr vom geschlossenen in den geöffneten Zustand um, sobald der durch die erste Versorgungsleitung 2 fließende elektrische Strom I einen vorbestimmten dritten Schwellwert überschreitet I₃ überschreitet, der größer ist als der erste Schwellwert I₁ der ersten Schaltung 11 und kleiner als der zweite Schwellwert I₂ ist der zweiten Schaltung 12. Die dritte Schaltung 13 realisiert eine Kurzschluss-Schutzfunktion, indem sie sie das Schaltelement 10 vom geschlossenen in den geöffneten Zustand umschaltet, sobald der durch die erste Versorgungsleitung 2 fließende elektrische Strom I einen vorbestimmten dritten Schwellwert I₃ überschreitet, der größer ist als der der erste Schwellwert I₁ der ersten Schaltung 11 und kleiner ist als der zweite Schwellwert I₂ der zweiten Schaltung 12.

Dies ist im Strom-Zeit-Diagramm der Figur 2 anhand des Graphen mit dem Bezugszeichen 16c gezeigt. Im Falle eines - in der Regel fehlerbedingten - elektrischen Kurzschlusses der beiden elektrischen Versorgungsleitungen 2, 3 und somit der elektrischen Batterie selbst, wird ein schnelles Ansteigen des elektrischen Kurzschlussstroms über einen kritischen Maximalwert hinaus durch die beiden Versorgungsleitungen 2, 3 vermieden, welches die - im Vergleich zur dritten Schaltung 13 - träge reagierende erste Schaltungsanordnung 11 nicht in ausreichendem Maße verhindern kann. Die Reaktionszeit t₃ der dritten Schaltung beträgt bei geeigneter Ausgestaltung typischerweise ca. 40ms.

Im Beispiel der Figur 1 ist die erste Schaltung 10 nun derart ausgelegt, dass der erste Schwellwert zwischen 1A und 1,4 A, vorzugsweise 1,1A, höchst vorzugsweise ca. 1,14A, liegt. Gemäß dem Beispielszenario sind die zweite und dritte Schaltung 12, 13 derart konzipiert, dass der zweite Schwellwert ca. 6A und der dritte Schwellwert ca. 2,5A beträgt. Durch eine Festlegung des zweiten Schwellwerts auf 6A - gegenüber einer Festlegung des ersten Schwellwerts auf einen Wert zwischen 1A und 1,4A - wird sichergestellt, dass die zweite Schaltung 12 erst bei Überschreitung eines Schwellstroms I₂ aktiviert wird, der deutlich über einem Wert I₁ liegt, bei dem die erste Schaltung 11 aktiviert wird, die zur Vermeidung einer Glühzündung die elektrische Versorgungsleitung 2 dauerhaft deaktiviert. Bei Überschreitung des dritten Schwellwerts I₃ wird ein kurzschluss-bedingtes, sehr schnelles und dauerhaftes Ansteigen des elektrischen Stroms verhindert.

Zur Ermittlung des durch die Versorgungsleitung fließenden elektrischen Stroms I ist beim Beispiel der Figur 1 in der ersten elektrischen Versorgungsleitung 2 ein elektrischer Stromsensor 14 vorgesehen, mittels welchem den durch die Versorgungsleitung 2 fließenden elektrischen Strom I bestimmt wird. Der Stromsensor 14 stellt den gemessenen Stromwert in Form eines geeigneten Sensor-Ausgangssignals, beispielsweise in Form einer an einer Signalausgangsleitung 15 bereitgestellten Sensor-Ausgangsspannung zur Weiterverarbeitung durch die drei Schaltungen 11, 12, 13 zur Verfügung. Der Stromsensor 14 kann im einfachsten Fall als niederohmiger elektrischer Widerstand ausgebildet sein, wobei die an diesem abfallenden elektrische Spannung ein Maß für den durch den Widerstand fließenden elektrischen Strom ist.

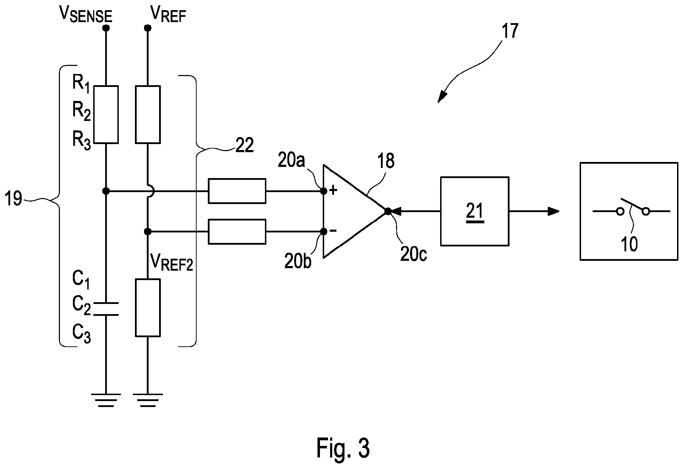

Um die Anzahl der zur Realisierung der ersten und dritten Schaltung 11, 13 benötigten Bauelemente und somit deren Fertigungsaufwand möglichst gering zu halten, können die drei Schaltungen 11, 12, 13 jeweils eine in der Figur 3 gezeigte Komparatorschaltung 17 umfassen, welche durch Vergleich eines vorbestimmten Referenz-Spannungssignals V_{REF} mit der vom Stromsensor 14 bereitgestellten elektrischen Sensor-Ausgangsspannung V_{SENSE} ein erstes elektrisches Spannungssignal erzeugt, wenn der durch die erste Versorgungsleitung 2 fließende elektrische Strom einen vorbestimmten ersten Schwellwert überschreitet. Beim vorbestimmten Referenz-Spannungssignal kann es sich beispielsweise um eine mittels eines herkömmlichen Spannungsteilers modifizierte herkömmliche 5V-Versorgungsspannung handeln. Durch geeignete Dimensionierung des Spannungsteilers kann die Versorgungsspannung in das gewünschte Referenz-Spannungssignal konvertiert werden. Die den drei Schaltungen 11, 12, 13 zugeordneten Komparatorschaltungen 17 unterscheiden voneinander zum einen durch das vorangehend vorgestellte Referenz-Spannungssignal, welches für jede der drei Schaltungen 11, 12, 13 derart konfiguriert ist, dass die Komparatorschaltung 17 bei Überschreiten des den drei Schaltungen 11, 12, 13 zugeordneten jeweiligen Schwellwerts (I₁, I₂, I₃) des elektrischen Stroms I durch die erste elektrische Versorgungsleitung 2 ausgangsseitig das erste Spannungssignal erzeugt, welches dann zum Umschalten des Schaltelements 10 durch die jeweilige der drei Schaltungen 11, 12, 13 führt.

In allen anderen Fällen wird demgegenüber ein vom ersten verschiedenes, zweites elektrisches Spannungssignal erzeugt. Das erste elektrische Spannungssignal kann beispielsweise ein erster Spannungspegel V₁, das zweite elektrische Spannungssignal ein zweiter Signalpegel V₂ sein. Technisch ist die Komparatorschaltung 17 mit Hilfe eines dem Fachmann bekannten Komparatorbauteils 18, etwa in der Art eines Operationsverstärkers realisiert, welches mit einem ersten Eingangsanschluss 20a mit einem Ausgangsanschluss des Stromsensors verbunden ist, an welchem die Sensor-Ausgangsspannung V_{SENSE} bereitgestellt wird. Mit einem zweiten Eingangsanschluss 20b ist das Komparatorbauteil 18 mit einer Referenz-Spannungsquelle verbunden, an welcher die Referenz-Spannung V_{REF} bereitgestellt wird. Diese kann mittels einer herkömmlichen Spannungsteilerschaltung 22 auf einen gewünschten Wert V_{REF2} reduziert werden, welcher die eigentliche Schwellspannung für das Komparatorbauteil 18 darstellt. Mittels einer eingangsseitig ist eine mit dem Ausgangsanschluss des Komparatorbauteil 18 und ausgangsseitig mit dem Schaltelement 10 zusammenwirkenden, in der Figur 3 nur abstrakt dargestellten und mit 21 bezeichneten Schaltungslogik wird das Schaltelement 10 von der ersten und dritten Schaltung 11, 13 dauerhaft bzw. von der zweiten Schaltung 12 kurzzeitig in den geöffneten Zustand umschaltet, sobald am Ausgangsanschluss 20c das erste Spannungssignal V₁ erzeugt wird. Elektrisch vorgeschaltet zum ersten Eingangsanschluss 20a des Komparatorbauteils 18 ist ein Tiefpassfilter 19, der auf das vom Stromsensor 14 erzeugte Sensor-Ausgangssignal V_{SENSE} als Tiefpass wirkt. Dies gestattet die Ausfilterung hochfrequenter Komponenten des elektrischen Stroms durch die Versorgungsleitung 2, die nicht im Zusammenhang mit einer möglichen Glühzündung stehen. Ein solcher Tiefpassfilter 19 kann in Form eines dem Fachmann bekannten und in der Figur 1 gezeigten RC-Glieds realisiert sein, wobei eine Grenzfrequenz, ab welcher das Filter als Tiefpass wirkt, durch geeignete Dimensionierung des ohmschen Widerstands R und der Kapazität C des RC-Glieds eingestellt werden kann.

Das RC-Glied weist in der ersten Schaltung 11 eine Kapazität C₁ von 1µF und einen Ohm'schen Widerstand R₁ von 100kOhm, das RC-Glied in der zweiten Schaltung 12 eine Kapazität C₂ von 100pF und einen Ohm'schen Widerstand R₂ von 1kOhm. Das RC-Glied in der dritten Schaltung 13 weist schließlich eine Kapazität C₃ von 1nF und einen Ohm'schen Widerstand R₃ von 10kOhm auf.

## Patentansprüche

1. Elektronische Schaltungsanordnung (1) zur Verwendung in einem explosionsgefährdeten Bereich,
- mit einer ersten und zweiten elektrischen Versorgungsleitung (2, 3), welche an einem ersten und zweiten Versorgungsleitung-Eingangsanschluss (4, 5) mit einer elektrischen Energieversorgungseinheit (6) verbindbar sind und an einem ersten und zweiten Versorgungseinheit-Ausgangsanschluss (7, 8) elektrisch mit einem externen elektronischen Gerät (9) zur Versorgung mit elektrischer Energie verbindbar sind;
- mit einem in der ersten Versorgungsleitung (2) vorgesehenen Schaltelement (10), welches zwischen einem geöffneten Zustand, in welchem es die erste Versorgungsleitung (2) elektrisch unterbricht, und einem geschlossenen Zustand umschaltbar ist;
- mit einer ersten elektronischen Schaltung (11), welche derart ausgebildet ist, dass sie das Schaltelement (10) vom geschlossenen in den geöffneten Zustand umschaltet, wenn der durch die erste Versorgungsleitung (2) fließende elektrische Strom (I) mindestens für eine vorbestimmten erste Zeitdauer (t1) einen vorbestimmten ersten Schwellwert (I₁) überschreitet;
- mit einer zweiten elektronischen Schaltung (12), welche derart ausgebildet ist, dass sie das Schaltelement (10) vom geschlossenen in den geöffneten Zustand umschaltet, wenn der durch die erste Versorgungsleitung (2) fließende elektrische Strom (I) einen vorbestimmten zweiten Schwellwert (I₂) überschreitet;
- mit einer dritten elektronische Schaltung (13), welche derart ausgebildet ist, dass sie das Schaltelement (10) vom geschlossenen in den geöffneten Zustand umschaltet, sobald der durch die erste Versorgungsleitung (2) fließende elektrische Strom für eine vorbestimmte dritte Zeitdauer (t₃) einen vorbestimmten dritten Schwellwert (I₃) überschreitet, wobei der dritte Schwellwert (I₃) größer ist als der erste Schwellwert (I₁) und kleiner ist als der zweite Schwellwert (I₂);
**dadurch gekennzeichnet dass**
- die zweite elektronische Schaltung (12) derart ausgebildet ist, dass sie das Schaltelement (10) nach Unterschreiten des zweiten Schwellwerts (I₂) wieder in den geschlossenen Zustand zurückschaltet;
- das Umschalten des Schaltelements (10) vom geschlossenen in den geöffneten Zustand durch die zweite Schaltung (12) innerhalb einer zweiten Umschalt-Zeitdauer (T₂) erfolgt, welche kleiner ist als eine erste Umschalt-Zeitdauer (T₁), die die erste Schaltung (11) zum Umschalten des Schaltelements (10) in den geöffneten Zustand benötigt;
- das Umschalten des Schaltelements (10) vom geschlossenen in den geöffneten Zustand durch dritte Schaltung (13) innerhalb einer dritten Umschalt-Zeitdauer (T₃) erfolgt, welche kleiner ist als die erste Umschalt-Zeitdauer (T₁), aber größer als die zweite Umschalt-Zeitdauer (T₂).

2. Elektronische Schaltungsanordnung nach Anspruch 1,
**dadurch gekennzeichnet, dass**
- die erste Umschaltdauer (T₁) zwischen 300ms und 1s beträgt,
- die zweite Umschaltdauer (T₂) derart festgelegt ist, dass die während der zweiten Umschaltdauer (T₂) übertragene elektrische Energie 40µJ nicht überschreitet,
- die dritte Umschaltdauer (T₃) ungefähr 40ms beträgt.

3. Elektronische Schaltungsanordnung nach Anspruch 1 oder 2,
**dadurch gekennzeichnet, dass**
- der erste Schwellwert (I₁) zwischen 1A und 1,4 A, vorzugsweise 1,1A, höchst vorzugsweise ca. 1,14A, beträgt,
- der zweite Schwellwert (I₂) ca. 6A beträgt,
- der dritte Schwellwert (I₃) ca. 2,5A beträgt.

4. Elektronische Schaltungsanordnung nach einem der vorhergehenden Anspche,
**dadurch gekennzeichnet, dass**
in der ersten elektrischen Versorgungsleitung (2) ein elektrischer Stromsensor (14) vorgesehen ist, welcher den durch die erste Versorgungsleitung (2) fließenden elektrischen Strom (I) bestimmbar und in Form einer mit dem gemessenen elektrischen Strom (I) korrespondierenden elektrischen Sensor-Ausgangsspannung bereitstellt.

5. Elektronische Schaltungsanordnung nach Anspruch 4,
**dadurch gekennzeichnet, dass**
die erste und/oder zweite und/oder dritte Schaltung (11, 12, 13) eine Komparatorschaltung (17) umfasst, welche durch Vergleich eines vorbestimmten Referenz-Spannungssignals mit der vom Stromsensor (14) bereitgestellten elektrischen Sensor-Ausgangsspannung ein erstes elektrisches Spannungssignal (V₁) erzeugt, wenn der durch die erste Versorgungsleitung (2) fließende elektrische Strom (I) einen vorbestimmten Komparator-Schwellwert überschreitet, und in allen anderen Fällen ein vom ersten verschiedenes zweites elektrisches Spannungssignal (V₂) erzeugen.

6. Elektronische Schaltungsanordnung nach Anspruch 5,
**dadurch gekennzeichnet, dass**
- die Komparatorschaltung (17) jeweils ein Komparatorbauteil (18) umfasst, welches mit einem ersten Eingangsanschluss (20a) mit einem Ausgangsanschluss des Stromsensors (14) verbunden ist, an welchem die Sensor-Ausgangsspannung (V_{SENSE}) bereitgestellt ist, und mit einem zweiten Eingangsanschluss mit einer Referenz-Spannungsquelle verbunden ist, an welcher die Referenz-Spannung (V_{REF}) bereitgestellt ist,
- dass eine eingangsseitig mit dem Ausgangsanschluss (20c) des Komparatorbauteils (18) und ausgangsseitig mit dem Schaltelement (10) zusammenwirkende erste Schaltungslogik (21) vorgesehen ist, welche das Schaltelement (10) in den geöffneten Zustand umschaltet, wenn am Ausgangsanschluss (20c) das erste Spannungssignal (V₁) anliegt.

7. Elektronische Schaltungsanordnung nach Anspruch 5 oder 6,
**dadurch gekennzeichnet, dass**
die Komparatorschaltung (17) einen am ersten Eingangsanschluss (20a) des Komparatorbauteils (17) vorgesehenen Tiefpassfilter (19) umfasst, der auf das vom Stromsensor (14) erzeugte Sensor-Ausgangssignal (V_{SENSE}) als Tiefpass wirkt.

8. Elektronische Schaltungsanordnung nach Anspruch 7,
**dadurch gekennzeichnet, dass**
der Tiefpassfilter (19) als RC-Glied ausgebildet ist.

9. Elektronische Schaltungsanordnung nach Anspruch 8,
**dadurch gekennzeichnet, dass**
- das RC-Glied in der ersten Schaltung (11) eine Kapazität C₁ von ungefähr 1µF und einen Ohm'schen Widerstand R₁ von ungefähr 100kOhm aufweist, und/oder
- das RC-Glied in der zweiten Schaltung (12) eine Kapazität C₂ von ungefähr100pF und einen Ohm'schen Widerstand R₂ von ungefähr 1kOhm, und/oder
- das RC-Glied in der dritten Schaltung (13) eine Kapazität C₃ von ungefähr 1nF und einen Ohm'schen Widerstand R₃ von ungefähr 10 kOhm aufweist.

10. Elektronische Baugruppe (23),
- mit einer elektronischen Schaltungsanordnung (1) nach einem der Ansprüche 1 bis 9,
- mit einer elektrisch der einer elektronischen Schaltungsanordnung (1) verbundenen elektrischen Energieversorgungseinheit (6), insbesondere einer Batterie.

11. Elektronisches System (24),
- mit einer elektronischen Baugruppe (23) nach Anspruch 10,
- mit einem mit den beiden Versorgungsleitung-Ausgangsanschlüssen der elektronischen Schaltungsanordnung (1) verbundenen elektronischen Gerät (9).

## Claims

1. Electronic circuit arrangement (1) for use in a potentially explosive atmosphere, comprising:
- a first supply line and a second supply line (2, 3) that are connectable at a first and second supply line input connection (4, 5) to an electric energy supply unit (6), and are electrically connectable at a first supply line output connection (7, 8) to an external electronic device (9) for the supply of electric energy;
- a switching element (10) provided in the first supply line (2), which switching element can be switched between an open state, in which it electrically interrupts the first supply line (2), and a closed state
- a first electronic circuit (11) configured to switch the switching element (10) from the closed state into the open state, when the electric current (I) flowing through the first supply line (2) exceeds a predefined first threshold value (I₁) at least for a predefined time duration (t1);
- a second electronic circuit (12) which is configured to switch the switching element (10) from the closed state to the open state, when the electric current (I) flowing through the first supply line (2) exceeds a predefined second threshold value (I₂);
- a third electronic circuit (13) which is configured to switch the switching element (10) from the closed state into the open state, as soon as the electric current flowing through the first supply line (2) exceeds a predefined third threshold value (I₃) for a predefined third time duration (t₃), wherein the third threshold value (I₃) is greater than the first threshold value (I₁) and smaller than the second threshold value (I₂);
**characterised in that**
- the second electronic circuit (12) is configured such that it switches back the switching element (10) into the closed state after falling below the second threshold (I₂);
- the switching of the switching element (10) from the closed to the open state is performed by the second circuit (12) within a second switching time period (T₂), which is shorter than a first switching time period (T₁), which the first circuit (11) requires for switching the switching element (10) into the open state;
- the switching element (10) is switched from the closed state into the opened state by the third circuit (13) within a third switch-over time duration (T₃), which is shorter than the first switch-over time duration (T₁) but longer than the second switch-over time duration (T₂).

2. Electronic circuit arrangement according to claim 1,
**characterised in that**
- the first switch-over duration (T₁) is between 300 ms and 1 s,
- the second switch-over duration (T₂) is set such that the electric energy transmitted during the second switch-over duration (T₂) does not exceed 40 µJ,
- the third switch-over duration (T₃) is approximately 40 ms.

3. Electronic circuit arrangement according to claim 1 or 2,
**characterised in that**
- the first threshold value (I₁) is between 1A and 1.4 A, preferably 1.1A, most preferably approximately 1.14 A,
- the second threshold value (I₂) is approximately 6 A,
- the third threshold value (I₃) is approximately 2.5 A.

4. Electronic circuit arrangement according to any of the preceding claims,
**characterised in that**
an electric current sensor (14) is provided in the first supply line (2), which electric current sensor is configured to determine the electric current (I) flowing through the first supply line (2) and provide an electric sensor output voltage corresponding with the measured electric current (I).

5. Electronic circuit arrangement according to claim 4,
**characterised in that**
the first circuit and/or second circuit and/or third circuit (11, 12, 13) includes a comparator circuit (17), which by comparison of a predetermined reference voltage signal with the electrical sensor output voltage provided by the current sensor (14) generates a first electric voltage signal (V₁), when the electric current (I) flowing through the first supply line (2) exceeds a predetermined comparator threshold value, and in all other cases generates a second electric voltage signal (V₂) which is different from the first.

6. Electronic circuit arrangement according to claim 5,
**characterised in that**
- the comparator circuit (17) includes a comparator component (18) respectively, which is connected via a first input connection (20a) to an output connection of the current sensor (14), at which the sensor output voltage (V_{SENSE}) is provided, and is connected to a second input connection with a reference voltage source, at which a reference voltage (V_{REF}) is provided,
- **in that** a first circuit logic (21) which on an input side cooperates with the output connection (20c) of the comparator component (18) and on an output side cooperates with the switching element (10), wherein the first circuit logic switches the switching element (10) into the opened state, if the first voltage signal (V₁) is present at the output connection (20c).

7. Electronic circuit arrangement according to claim 5 or 6,
**characterised in that**
the comparator circuit (17) includes a low-pass filter (19) provided at the first input connection (20a) of the comparator component (17), which acts as a low-pass upon a sensor output signal (V_{SENSE}) provided by the current sensor (14).

8. Electronic circuit arrangement according to claim 7,
**characterised in that**
the low-pass filter (19) is configured as an RC member.

9. Electronic circuit arrangement according to claim 8,
**characterised in that**
- the RC member in the first circuit (11) has a capacity C₁ of approximately 1 µF and an ohmic resistance R₁ of approximately 100 kOhm, and/or
- the RC member in the second circuit (12) has a capacity C₂ of approximately 100 pF and an ohmic resistance R₂ of approximately 1 kOhm, and/or
- the RC member in the third circuit (13) has a capacity C₃ of approximately 1 nF and an ohmic resistance R₃ of approximately 10 kOhm.

10. Electronic module (23) comprising:
- an electronic circuit arrangement (1) according to any of claims 1 to 9,
- an electric power supply unit (6) connected electrically to an electronic circuit arrangement (1), in particular a battery.

11. Electronic system (24) comprising
- an electronic module (23) according to claim 10,
- an electronic device (9) connected to the two supply line output connections of the electronic circuit arrangement (1).

## Revendications

1. Ensemble formant circuit électronique (1) destiné à être utilisé dans une zone à risque d'explosions,
- avec une première et une deuxième ligne d'alimentation électrique (2, 3), lesquelles peuvent être reliées à une unité d'alimentation en énergie électrique (6) sur une première et une deuxième borne d'entrée de ligne d'alimentation (4, 5) et peuvent être reliées électriquement à un appareil électronique (9) externe pour l'alimentation en énergie électrique sur une première et une deuxième borne de sortie d'unité d'alimentation (7, 8) ;
- avec un élément de commutation (10) prévu dans la première ligne d'alimentation (2), lequel peut passer entre un état ouvert, dans lequel il coupe électriquement la première ligne d'alimentation (2), et un état fermé ;
- avec un premier circuit (11) électronique, lequel est réalisé de telle manière qu'il passe l'élément de commutation (10) de l'état fermé à l'état ouvert quand le courant électrique (I) circulant à travers la première ligne d'alimentation (2) dépasse une première valeur de seuil (I₁) prédéfinie pendant une première durée (t1) prédéfinie ;
- avec un deuxième circuit (12) électronique, qui est réalisé de telle manière qu'il passe l'élément de commutation (10) de l'état fermé à l'état ouvert quand le courant électrique (I) circulant à travers la première ligne d'alimentation (2) dépasse une deuxième valeur de seuil (I₂) prédéfinie ;
- avec un troisième circuit (13) électronique, qui est réalisé de telle manière qu'il passe l'élément de commutation (10) de l'état fermé à l'état ouvert dès que le courant électrique circulant à travers la première ligne d'alimentation (2) dépasse une troisième valeur de seuil (I₃) prédéfinie pendant une troisième durée (t₃) prédéfinie, dans lequel la troisième valeur de seuil (I₃) est supérieure à la première valeur de seuil (I₁) et est inférieure à la deuxième valeur de seuil (I₂) ;
**caractérisé en ce que**
- le deuxième circuit (12) électronique est réalisé de telle manière qu'il repasse à nouveau l'élément de commutation (10) à l'état fermé après le non-dépassement de la deuxième valeur de seuil (I₂) ;
- le passage de l'élément de commutation (10) de l'état fermé à l'état ouvert est effectué par le deuxième circuit (12) dans une deuxième période de temps de passage (T₂) laquelle est inférieure à une première période de temps de passage (T₁) que le premier circuit (11) requiert pour passer l'élément de commutation (10) à l'état ouvert ;
- le passage de l'élément de commutation (10) de l'état fermé à l'état ouvert par le troisième circuit (13) est effectué dans une troisième période de temps de passage (T₃) qui est inférieure à la première période de temps de passage (T₁), mais supérieure à la deuxième période de temps de passage (T₂).

2. Ensemble formant circuit électronique selon la revendication 1,
**caractérisé en ce que**
- la première durée de passage (T₁) est comprise entre 300 ms et 1 s ;
- la deuxième durée de passage (T₂) est fixée de telle manière que l'énergie électrique transmise pendant la deuxième durée de passage (T2) ne dépasse pas 40 µJ,
- la troisième durée de passage (T₃) est d'à peu près 40 ms.

3. Ensemble formant circuit électronique selon la revendication 1 ou 2,
**caractérisé en ce que**
- la première valeur de seuil (I₁) est comprise entre 1 A et 1,4 A, de préférence est de 1,1 A, le plus préférentiellement d'environ 1,14 A,
- la deuxième valeur de seuil (I₂) est d'environ 6 A,
- la troisième valeur de seuil (I₃) est d'environ 2,5 A.

4. Ensemble formant circuit électronique selon l'une quelconque des revendications précédentes,
**caractérisé en ce que**
dans la première ligne d'alimentation (2) électrique est prévu un capteur de courant (14) électrique, lequel peut définir le courant électrique (I) circulant à travers la première ligne d'alimentation (2) et le fournit sous la forme d'une tension de sortie de capteur électrique correspondant au courant électrique (I) mesuré.

5. Ensemble formant circuit électronique selon la revendication 4,
**caractérisé en ce que**
le premier et/ou deuxième et/ou troisième circuit (11, 12, 13) comprennent un circuit comparateur (17), lequel génère un premier signal de tension (V₁) électrique par la comparaison d'un signal de tension de référence prédéfinie à la tension de sortie de capteur électrique fournie par le capteur de courant (14) quand le courant électrique (I) circulant à travers la première ligne d'alimentation (2) dépasse une valeur de seuil de comparateur prédéfinie et génère, dans tous les autres cas, un deuxième signal de tension (V₂) électrique différent du premier.

6. Ensemble formant circuit électronique selon la revendication 5,
**caractérisé en ce que**
- le circuit comparateur (17) comprend respectivement un composant comparateur (18), lequel est relié par une première borne d'entrée (20a) à une borne de sortie du capteur de courant (14), sur laquelle la tension de sortie de capteur (V_{SENSE}) est fournie, et est relié par une deuxième borne d'entrée à une source de tension de référence, sur laquelle la tension de référence (V_{REF}) est fournie,
- **en ce qu'**est prévue une première logique de commutation (21) coopérant, côté entrée, avec la borne de sortie (20c) du composant comparateur (18) et, côté sortie, avec l'élément de commutation (10), laquelle passe l'élément de commutation (10) à l'état ouvert quand le premier signal de tension (V₁) est appliqué sur la borne de sortie (20c).

7. Ensemble formant circuit électronique selon la revendication 5 ou 6,
**caractérisé en ce que**
le circuit comparateur (17) comprend un filtre passe-bas (19) prévu sur la première borne d'entrée (20a) du composant comparateur (17), qui agit en tant qu'élément passe-bas sur le signal de sortie de capteur (V_{SENSE}) généré par le capteur de courant (14).

8. Ensemble formant circuit électronique selon la revendication 7,
**caractérisé en ce que**
le filtre passe-bas (19) est réalisé en tant qu'un élément RC.

9. Ensemble formant circuit électronique selon la revendication 8,
**caractérisé en ce que**
- l'élément RC dans le premier circuit (11) présente une capacité C₁ d'à peu près 1 µF et une résistance ohmique R₁ d'à peu près 100 kOhm,
et/ou
- l'élément RC dans le deuxième circuit (12) présente une capacité C₂ d'au moins 100 pF et une résistance ohmique R₂ d'à peu près 1 kOhm,
et/ou
- l'élément RC dans le troisième circuit (13) présente une capacité C₃ d'environ 1 nF et une résistance ohmique R₃ d'à peu près 10 kOhm.

10. Module électronique (23),
- avec un ensemble formant circuit électronique (1) selon l'une quelconque des revendications 1 à 9,
- avec une unité d'alimentation en énergie électrique (6) reliée électriquement à un ensemble formant circuit électronique (1), en particulier une batterie.

11. Système électronique (24),
- avec un module électronique (23) selon la revendication 10,
- avec un appareil électronique (9) relié aux deux bornes de sortie de ligne d'alimentation de l'ensemble formant circuit électronique (1).
